# EUROPEAN PATENT APPLICATION

(11) **EP 4 531 270 A1**
(43) Date of publication of application: **02.04.2025**
(21) Application number: 23867080.6
(22) Date of filing: 30.06.2023
(51) Int. Cl.: H02P 27/06, H02P 27/08, H02P 23/00, B60L 15/20

(54) **MOTOR CONTROLLER, POWERTRAIN AND ELECTRIC VEHICLE**

(30) Priority: 23.09.2022 CN 202211166836
(71) Applicant: Huawei Digital Power Technologies Co., Ltd., Shenzhen, Guangdong 518043 (CN)
(72) Inventor: XU, Yankun, Shenzhen, Guangdong 518043 (CN); ZHAO, Yang, Shenzhen, Guangdong 518043 (CN)
(74) Representative: Maiwald GmbH
(86) International application number: PCT/CN2023/105293
(87) International publication number: WO 2024/060785

(57) **Abstract**

Embodiments of this application disclose a motor control unit, a powertrain, and an electric vehicle. The motor control unit includes an inverter circuit, the inverter circuit includes three bridge arms, each bridge arm includes an upper bridge switching transistor and a lower bridge switching transistor, and bridge arm midpoints of the three bridge arms are respectively connected to three phase windings of a drive motor. In response to a current frequency of at least one phase winding being greater than or equal to a first frequency threshold, three upper bridge switching transistors or three lower bridge switching transistors switch from an alternate conduction mode to a continuous conduction mode or a continuous cutoff mode; or three upper bridge switching transistors and three lower bridge switching transistors switch from an alternate conduction mode to a continuous cutoff mode. In response to a current frequency of at least one phase winding being less than a second frequency threshold, the three upper bridge switching transistors and the three lower bridge switching transistors switch from an alternate conduction mode to a continuous cutoff mode; or the three upper bridge switching transistors or the three lower bridge switching transistors switch from a continuous conduction mode to a continuous cutoff mode. In embodiments of this application, control accuracy of the motor control unit can be improved.

## Description

This application claims priority to Chinese Patent Application No. 202211166836.X, filed with the China National Intellectual Property Administration on September 23, 2022 and entitled "MOTOR CONTROL UNIT, POWERTRAIN, AND ELECTRIC VEHICLE", which is incorporated herein by reference in its entirety.

### TECHNICAL FIELD

Embodiments of this application relate to the field of electronic circuit technologies, and in particular, to a motor control unit, a powertrain, and an electric vehicle.

### BACKGROUND

According to a functional safety requirement, when a processor-level fault occurs in an electric vehicle, for example, a fault of a digital signal processor (digital signal processing, DSP) or power supply, to ensure safety and/or prevent generation of unexpected torque, a motor control unit (motor control unit, MCU) can still be controlled to enter a safety state. The safety state may be an active short circuit (active short circuit, ASC) state, or may be a safety pulse off (safety pulse off, SPO) state. Therefore, it is very important to accurately control the motor control unit when the processor-level fault occurs in the electric vehicle.

### SUMMARY

Embodiments of this application disclose a motor control unit, a powertrain, and an electric vehicle, to improve control accuracy of the motor control unit.

According to a first aspect, this application discloses a motor control unit, configured to control a drive motor of an electric vehicle, where the drive motor includes three phase windings, the motor control unit includes an inverter circuit, the inverter circuit supplies power to the drive motor, the inverter circuit includes three bridge arms, each bridge arm includes an upper bridge switching transistor and a lower bridge switching transistor, and bridge arm midpoints of the three bridge arms are respectively connected to the three phase windings of the drive motor, where in response to a current frequency of at least one phase winding in the three phase windings being greater than or equal to a first frequency threshold, operating modes of three upper bridge switching transistors are switched from an alternate conduction mode to a continuous conduction mode, and operating modes of three lower bridge switching transistors are switched from an alternate conduction mode to a continuous cutoff mode; or operating modes of three upper bridge switching transistors are switched from an alternate conduction mode to a continuous cutoff mode, and operating modes of three lower bridge switching transistors are switched from an alternate conduction mode to a continuous conduction mode; or operating modes of three upper bridge switching transistors and three lower bridge switching transistors are switched from an alternate conduction mode to a continuous cutoff mode; or in response to a current frequency of at least one phase winding in the three phase windings being less than or equal to a second frequency threshold, operating modes of three upper bridge switching transistors and three lower bridge switching transistors are switched from an alternate conduction mode to a continuous cutoff mode; or operating modes of three upper bridge switching transistors or three lower bridge switching transistors are switched from a continuous conduction mode to a continuous cutoff mode. The first frequency threshold is greater than the second frequency threshold.

In this embodiment of this application, when a processor-level fault occurs in the electric vehicle, and the current frequency of the at least one phase winding in the three phase windings of the drive motor is greater than or equal to the first frequency threshold, it indicates that a rotational speed of the drive motor is high, and a traffic accident is prone to occur. To ensure safety, the operating modes of the three upper bridge switching transistors in the inverter circuit may be switched from an alternate conduction mode to a continuous conduction mode, and the operating modes of the three lower bridge switching transistors may be switched from an alternate conduction mode to a continuous cutoff mode; or the operating modes of the three upper bridge switching transistors may be switched from an alternate conduction mode to a continuous cutoff mode, and the operating modes of the three lower bridge switching transistors may be switched from an alternate conduction mode to a continuous conduction mode; or the operating modes of the three upper bridge switching transistors and the three lower bridge switching transistors in the inverter circuit may be switched from an alternate conduction mode to a continuous cutoff mode.

When the current frequency of the at least one phase winding in the three phase windings of the drive motor is less than or equal to the second frequency threshold, it indicates that the rotational speed of the drive motor is low. To avoid generation of unexpected torque, the operating modes of the three upper bridge switching transistors and the three lower bridge switching transistors in the inverter circuit may be switched from an alternate conduction mode to a continuous cutoff mode; or the operating modes of the three upper bridge switching transistors or the three lower bridge switching transistors in the inverter circuit may be switched from a continuous conduction mode to a continuous cutoff mode.

It can be learnt that operating states of the six switching transistors in the inverter circuit are determined based on the current frequency of the at least one phase winding in the three phase windings, instead of being determined based on a back electromotive force frequency of the winding. Because an amplitude of a current signal is higher than an amplitude of a voltage signal, anti-interference capability is strong. Therefore, when the processor-level fault occurs in the electric vehicle, the operating states of the six switching transistors in the inverter circuit are accurately determined based on the current frequency of the at least one phase winding in the three phase windings. This can improve control accuracy of the motor control unit.

In a possible implementation, the motor control unit includes a current detection circuit, and the current detection circuit is configured to: detect a current frequency of at least one phase winding in the three phase windings; and in response to a current frequency of at least one phase winding in the three phase windings being greater than or equal to the first frequency threshold, output a first detection signal indicating that the rotational speed of the drive motor is greater than or equal to a first threshold; or in response to a current frequency of at least one phase winding in the three phase windings being less than the second frequency threshold, output a second detection signal indicating that the rotational speed of the drive motor is less than or equal to a second threshold. The first threshold is greater than the second threshold.

In this embodiment of this application, the current detection circuit in the motor control unit can accurately detect the current signal flowing through the at least one phase winding in the three phase windings of the drive motor. Because the amplitude of the current signal is higher than the amplitude of the voltage signal, and the anti-interference capability is strong, the operating states of the six switching transistors in the inverter circuit can be accurately determined based on the current frequency of the at least one phase winding in the three phase windings, thereby improving the control accuracy of the motor control unit.

In a possible implementation, the motor control unit includes a control module, and the control module is configured to: control a running mode of the motor control unit; and in response to the first detection signal, output a first control signal for controlling the motor control unit to run in an active short circuit state or a second control signal for controlling the motor control unit to run in a safety pulse off state; or in response to the second detection signal, output the second control signal for controlling the motor control unit to run in a safety pulse off state. When the motor control unit runs in the active short circuit state, the operating modes of the three upper bridge switching transistors are a continuous conduction mode, and the operating modes of the three lower bridge switching transistors are a continuous cutoff mode; or the operating modes of the three upper bridge switching transistors are a continuous cutoff mode, and the operating modes of the three lower bridge switching transistors are a continuous conduction mode. When the motor control unit runs in the safety pulse off state, the operating modes of the three upper bridge switching transistors and the three lower bridge switching transistors are all a continuous cutoff mode.

In a possible implementation, the motor control unit includes a control module, and the control module is configured to: control a running mode of the motor control unit; and in response to a current frequency of at least one phase winding in the three phase windings being greater than or equal to the first frequency threshold, control the motor control unit to run in an active short circuit state or a safety pulse off state; or in response to a current frequency of at least one phase winding in the three phase windings being less than or equal to the second frequency threshold, control the motor control unit to run in a safety pulse off state.

In a possible implementation, the motor control unit includes a drive circuit, and the drive circuit is configured to: control running modes of the upper bridge switching transistors and the lower bridge switching transistors in the inverter circuit; and in response to the first control signal, control the operating modes of the three upper bridge switching transistors to switch from an alternate conduction mode to a continuous conduction mode and the operating modes of the three lower bridge switching transistors to switch from an alternate conduction mode to a continuous cutoff mode; or control the operating modes of the three upper bridge switching transistors to switch from an alternate conduction mode to a continuous cutoff mode and the operating modes of the three lower bridge switching transistors to switch from an alternate conduction mode to a continuous conduction mode; or in response to the second control signal, control the operating modes of the three upper bridge switching transistors and the three lower bridge switching transistors to switch from an alternate conduction mode to a continuous cutoff mode; or control the operating modes of the three upper bridge switching transistors or the three lower bridge switching transistors to switch from a continuous conduction mode to a continuous cutoff mode.

In a possible implementation, the motor control unit includes a drive circuit, and the drive circuit is configured to: control running modes of the upper bridge switching transistors and the lower bridge switching transistors in the inverter circuit; and in response to a current frequency of at least one phase winding in the three phase windings being greater than or equal to the first frequency threshold, control the operating modes of the three upper bridge switching transistors to switch from an alternate conduction mode to a continuous conduction mode and the operating modes of the three lower bridge switching transistors to switch from an alternate conduction mode to a continuous cutoff mode; or control the operating modes of the three upper bridge switching transistors to switch from an alternate conduction mode to a continuous cutoff mode and the operating modes of the three lower bridge switching transistors to switch from an alternate conduction mode to a continuous conduction mode; or control the operating modes of the three upper bridge switching transistors and the three lower bridge switching transistors to switch from an alternate conduction mode to a continuous cutoff mode; or in response to a current frequency of at least one phase winding in the three phase windings being less than the second frequency threshold, control the operating modes of the three upper bridge switching transistors and the three lower bridge switching transistors to switch from an alternate conduction mode to a continuous cutoff mode; or control the operating modes of the three upper bridge switching transistors or the three lower bridge switching transistors to switch from a continuous conduction mode to a continuous cutoff mode.

In a possible implementation, the control module and/or the drive circuit are/is configured to receive power supplied by two or more independent power supplies.

In this embodiment of this application, the control module and/or the drive circuit are/is powered by two or more independent power supplies. When one power supply cannot supply power, another power supply may supply power, to ensure normal power supply to the control module and/or the drive circuit. This can improve safety.

In a possible implementation, the first frequency threshold and the second frequency threshold are adjusted with an input voltage of the inverter circuit.

In this embodiment of this application, the first frequency threshold and the second frequency threshold can be adjusted with the input voltage of the inverter circuit, and the current frequency in the ASC state and the SPO state can also vary with a change of the input voltage of the inverter circuit. This can improve adaptability of the motor control unit.

In a possible implementation, the current detection circuit includes a current sampling circuit, a frequency-to-voltage conversion circuit, and a voltage comparator. The current sampling circuit is configured to output an alternating current signal based on a current frequency of at least one phase winding in the three phase windings; the frequency-to-voltage conversion circuit is configured to output a direct current signal based on a result of comparison between a voltage of the alternating current signal and a first reference voltage; and the voltage comparator is configured to output the first detection signal or the second detection signal based on a result of comparison between a voltage of the direct current signal and a second reference voltage.

In a possible implementation, the current sampling circuit includes one or more Hall effect sensors, and there is a spacing between each Hall effect sensor and any electrical connection line between the bridge arm midpoints of the three bridge arms and the three phase windings of the drive motor.

In this embodiment of this application, because the alternating current signal is detected by a current sampler, and the current sampler is located on a low-voltage side, isolation and packaging do not need to be performed in consideration of safety regulations, and a smaller board area is occupied.

In a possible implementation, the frequency-to-voltage conversion circuit includes a comparator and a filter circuit. A first input end of the comparator is connected to the current sampling circuit, a second input end of the comparator is connected to the first reference voltage, and the filter circuit is separately connected to an output end of the comparator and the voltage comparator.

In this embodiment of this application, the current sampling circuit detects the current signal flowing through the at least one phase winding in the three phase windings of the drive motor. An amplitude of the current signal is higher. The frequency-to-voltage conversion circuit can implement conversion from a frequency signal to a voltage signal by using a simple circuit. The circuit structure is simple, costs are low, and reliability is higher.

In a possible implementation, a first input end of the voltage comparator is connected to the second reference voltage, a second input end of the voltage comparator is connected to the frequency-to-voltage conversion circuit, and an output end of the voltage comparator is connected to the control module.

In a possible implementation, the second reference voltage is adjusted with the input voltage of the inverter circuit.

In this embodiment of this application, the reference voltage of the voltage comparator can be adjusted with the input voltage of the inverter circuit, and the current frequency in the ASC state and the SPO state can also vary with a change of a voltage of a high-voltage bus. This can improve adaptability of the motor control unit.

According to a second aspect, this application discloses a powertrain, where the powertrain includes a drive motor configured to control an electric vehicle and the motor control unit disclosed in any one of the first aspect or the possible implementations of the first aspect, and the motor control unit supplies power to the drive motor.

According to a third aspect, this application discloses an electric vehicle, including a power battery and the motor control unit disclosed in any one of the first aspect or the possible implementations of the first aspect or the powertrain disclosed in any one of the second aspect or the possible implementations of the second aspect. The power battery supplies power to the motor control unit or the powertrain.

### BRIEF DESCRIPTION OF DRAWINGS

FIG. 1 is a diagram of a scenario of an electric vehicle according to an embodiment of this application;
FIG. 2 is a diagram of a structure of a powertrain according to an embodiment of this application;
FIG. 3 is a diagram of a structure of another powertrain according to an embodiment of this application;
FIG. 4 is a diagram of a structure of a motor control unit according to an embodiment of this application;
FIG. 5 is a diagram of a structure of another motor control unit according to an embodiment of this application;
FIG. 6 is a diagram of a structure of still another motor control unit according to an embodiment of this application;
FIG. 7 is a diagram of a structure of still another motor control unit according to an embodiment of this application;
FIG. 8 is a diagram of a structure of still another motor control unit according to an embodiment of this application;
FIG. 9 is a diagram of a structure of still another motor control unit according to an embodiment of this application;
FIG. 10 is a diagram of a structure of still another motor control unit according to an embodiment of this application;
FIG. 11 is a diagram of a structure of still another motor control unit according to an embodiment of this application;
FIG. 12 is a diagram of a structure of still another motor control unit according to an embodiment of this application;
FIG. 13 is a diagram of a structure of still another motor control unit according to an embodiment of this application;
FIG. 14 is a diagram of a structure of still another motor control unit according to an embodiment of this application; and
FIG. 15 is a diagram of a structure of still another motor control unit according to an embodiment of this application.

### DESCRIPTION OF EMBODIMENTS

Embodiments of this application disclose a motor control unit, a powertrain, and an electric vehicle, to improve control accuracy of the motor control unit. Details are separately described below.

In the specification, claims, and accompanying drawings of this application, the terms "first", "second", "third", and the like are intended to distinguish between different objects but do not indicate a particular order. In addition, terms "including" and "having" and any other variants thereof are intended to cover a non-exclusive inclusion. For example, a process, method, system, product, or device that includes a series of steps or units is not limited to the listed steps or units, but optionally further includes steps or units that are not listed. Alternatively, other steps or units inherent to the process, method, product, or device are optionally further included.

It should be understood that in this application, "at least one (item)" indicates one or more and "a plurality of" indicates two or more. The term "and/or" is used for describing an association relationship between associated objects, and represents that three relationships may exist. For example, "A and/or B" may represent the following three cases: Only A exists, only B exists, and both A and B exist, where A and B may be singular or plural. The character "/" generally indicates an "or" relationship between the associated objects. "At least one of the following items (pieces)" or a similar expression thereof indicates any combination of these items, including a single item (piece) or any combination of a plurality of items (pieces). For example, at least one item (piece) of a, b, or c may indicate: a, b, c, a and b, a and c, b and c, or a, b, and c, where a, b, and c may be singular or plural.

"Embodiment" mentioned in this specification means that a particular feature, structure, or characteristic described with reference to the embodiment may be included in at least one embodiment of this application. The phrase appearing at various locations in the specification does not necessarily refer to a same embodiment, and is not an independent or alternative embodiment mutually exclusive with another embodiment. A person skilled in the art explicitly and implicitly understands that embodiments described in this specification may be combined with other embodiments.

"Coupling" and "connection" indicates an electrical connection, including direct connection through a wire or a connection end, or indirect connection by using another component (for example, an inductor, a capacitor, or a resistor in embodiments of this application). Therefore, "coupling" and "connection" should be considered as a generalized electronic communication connection. In addition, the displayed or discussed mutual couplings or direct couplings or connections may be implemented through some interfaces. The indirect couplings or connections between the apparatuses, units, or devices may be implemented in communication, electrical, or other forms.

The circuits or other components may be described as or referred to as "configured to" perform one or more tasks. In this case, the term "configured to" is used for implying a structure by indicating that a circuit/component includes a structure (for example, a circuit system) that performs one or more tasks during operation. Therefore, even when a specified circuit/component is currently not operable (for example, not opened), the circuit/component may also be referred to as being configured to perform the task. Circuits/components used in conjunction with the "configured to" phrase include hardware, for example, a circuit for performing an operation.

Terms such as "component", "module", and "system" used in this specification indicate computer-related entities, hardware, firmware, combinations of hardware and software, software, or software being executed. For example, a component may be, but is not limited to, a process that runs on a processor, a processor, an object, an executable file, an execution thread, a program, and/or a computer. As illustrated by using figures, both an application that runs on a computing device and the computing device may be components. One or more components may reside within a process and/or an execution thread, and a component may be located on one computer and/or distributed between two or more computers. In addition, these components may be executed from various computer-readable media that store various data structures. For example, the components may communicate by using a local and/or remote process and based on, for example, a signal having one or more data packets (for example, data from two components interacting with another component in a local system, a distributed system, and/or across a network such as an internet interacting with other systems by using the signal).

To better understand the motor control unit, the powertrain, and the electric vehicle disclosed in embodiments of this application, the following first describes related technologies in embodiments of this application.

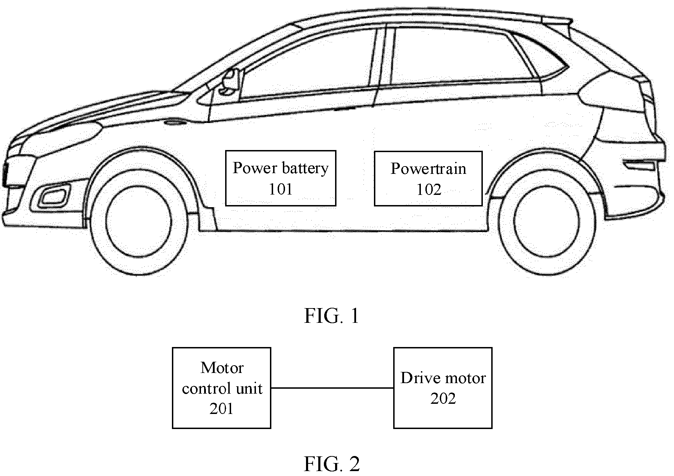

FIG. 1 is a diagram of a scenario of an electric vehicle according to an embodiment of this application. As shown in FIG. 1, the electric vehicle may include a power battery 101 and a powertrain 102. The power battery 101 is connected to the powertrain 102. When the electric vehicle is not connected to a power supply, the power battery 101 may supply power to the powertrain 102. When the electric vehicle is connected to the power supply, the power supply may charge the power battery 101 through the powertrain 102.

FIG. 2 is a diagram of a structure of a powertrain according to an embodiment of this application. As shown in FIG. 2, a powertrain 102 may include a drive motor 202 and a motor control unit 201. The motor control unit 201 is configured to control a running status of the drive motor 202. Specifically, the motor control unit 201 outputs three phase currents to supply power to three phase windings of the drive motor 202.

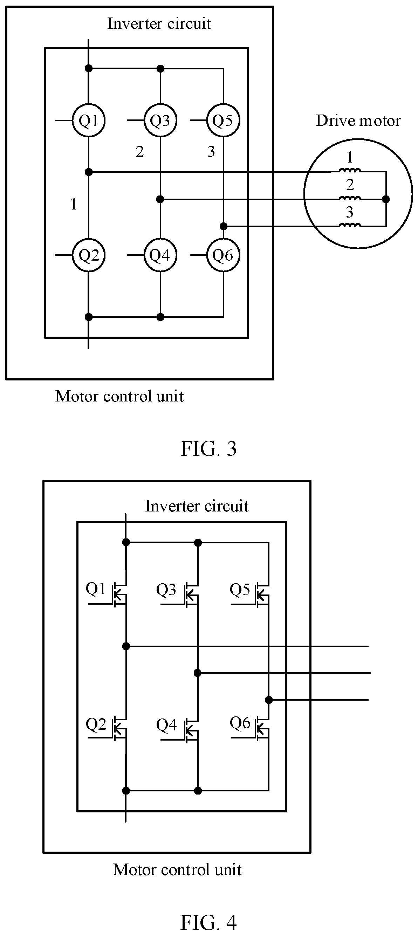

FIG. 3 is a diagram of a structure of another powertrain according to an embodiment of this application. As shown in FIG. 3, a motor control unit 201 includes an inverter circuit. The inverter circuit includes three bridge arms, and a drive motor may include three phase windings. Each of the three bridge arms includes an upper bridge switching transistor and a lower bridge switching transistor, and bridge arm midpoints of the three bridge arms are respectively connected to the three phase windings of the drive motor. The bridge arm midpoints of the three bridge arms respectively output three phase currents to supply power to the three phase windings of the drive motor 202.

For example, the inverter circuit includes a bridge arm 1, a bridge arm 2, and a bridge arm 3. As shown in FIG. 3, the bridge arm 1 of the inverter circuit may include a switching transistor Q1 and a switching transistor Q2, the bridge arm 2 of the inverter circuit may include a switching transistor Q3 and a switching transistor Q4, and the bridge arm 3 of the inverter circuit may include a switching transistor Q5 and a switching transistor Q6. A midpoint of the bridge arm 1 of the inverter circuit is connected to a winding 1 of the drive motor, and outputs a phase current to the winding 1 of the drive motor. A midpoint of the bridge arm 2 of the inverter circuit is connected to a winding 2 of the drive motor, and outputs a phase current to the winding 2 of the drive motor. A midpoint of the bridge arm 3 of the inverter circuit is connected to a winding 3 of the drive motor, and outputs a phase current to the winding 3 of the drive motor.

In this embodiment of this application, the switching transistor may be a metal-oxide semiconductor field-effect transistor (metal-oxide semiconductor field-effect transistor, MOSFET), or may be an insulated gate bipolar transistor (insulated gate bipolar transistor, IGBT), or may be a gallium nitride (gallium nitride, GaN) switching transistor, or may be a silicon carbide (silicon carbide, SiC) switching transistor. In this application, an example in which the switching transistor is an MOSFET is used for description.

When a processor-level fault occurs in a motor control unit of an electric vehicle, a rotational speed of a drive motor may be excessively high or excessively low, and the electric vehicle is prone to a traffic accident. In this embodiment of this application, if the processor-level fault occurs in the motor control unit, it may be understood that a component such as a DSP in the motor control unit is faulty or a power supply fault occurs on a component such as a DSP. As a result, the motor control unit cannot control, according to an instruction of the DSP, the rotational speed of the drive motor.

In the conventional technology, a rotational speed of a drive motor is usually detected by measuring a back electromotive force of a winding of the drive motor. Specifically, voltage signals of two phase windings in the three phase windings of the drive motor are detected, and the two voltage signals are compared to obtain a back electromotive force signal. However, anti-interference capability of the signal obtained through back electromotive force detection of the drive motor is weak. Consequently, the motor control unit cannot be accurately controlled, and it is difficult to ensure safety of the electric vehicle. In addition, a complex processing circuit needs to be used for the signal obtained through back electromotive force detection of the drive motor, and the complex circuit structure affects stability and costs are high.

To resolve the foregoing problems, embodiments of this application provide a motor control unit, a powertrain, and an electric vehicle. A rotational speed of a drive motor is detected by detecting a current frequency of at least one phase winding in three phase windings of the drive motor. A signal obtained through detection based on the current frequency of the at least one phase winding in the three phase windings of the drive motor has strong anti-interference capability. This can improve control accuracy of the motor control unit. In addition, a processing circuit structure of the signal obtained through detection based on the current frequency of the at least one phase winding in the three phase windings of the drive motor is simple. This can improve stability of the motor control unit, the powertrain and the electric vehicle and reduce costs of the motor control unit, the powertrain and the electric vehicle.

FIG. 4 is a diagram of a structure of a motor control unit according to an embodiment of this application. As shown in FIG. 4, the motor control unit may include an inverter circuit. The inverter circuit may include three bridge arms, each of the three bridge arms may include an upper bridge switching transistor and a lower bridge switching transistor, and bridge arm midpoints of the three bridge arms are respectively connected to three phase windings of a drive motor.

As shown in FIG. 4, a first bridge arm of the three bridge arms may include a switching transistor Q1 and a switching transistor Q2, a second bridge arm may include a switching transistor Q3 and a switching transistor Q4, and a third bridge arm may include a switching transistor Q5 and a switching transistor Q6. The first bridge arm, the second bridge arm, and the third bridge arm are connected in parallel. The switching transistor Q1 is connected to the switching transistor Q2 in series, the switching transistor Q3 is connected to the switching transistor Q4 in series, and the switching transistor Q5 is connected to the switching transistor Q6 in series. The switching transistor Q1, the switching transistor Q3, and the switching transistor Q5 are upper bridge switching transistors, and the switching transistor Q2, the switching transistor Q4, and the switching transistor Q6 are lower bridge switching transistors. In this embodiment of this application, the first bridge arm, the second bridge arm, and the third bridge arm may be interchanged.

When no processor-level fault occurs in the electric vehicle, the motor control unit runs in a normal operating state. When the motor control unit runs in a normal operating state, the inverter circuit may run in a normal operating state. When the inverter circuit runs in a normal operating state, operating modes of the three upper bridge switching transistors Q1, Q3, and Q5 and the three lower bridge switching transistors Q2, Q4, and Q6 of the inverter circuit are all an alternate conduction mode. In this embodiment of this application, that the switching transistors are alternately conducted may be understood as that the switching transistors alternate between being conducted and being cut off, instead of being always in a conducted state or a cutoff state. In this embodiment of this application, the alternate conduction mode of the switching transistors may also be understood as that the switching transistors are conducted or cut off based on a pulse width modulation (pulse width modulation, PWM) signal. For example, when the PWM signal is at a high level, the switching transistor is conducted. When the PWM signal is at a low level, the switching transistor is cut off.

In response to a current frequency of at least one phase winding in the three phase windings being greater than or equal to a first frequency threshold, operating modes of the three upper bridge switching transistors Q1, Q3, and Q5 in the inverter circuit may be switched from an alternate conduction mode to a continuous conduction mode, and operating modes of the three lower bridge switching transistors Q2, Q4, and Q6 in the inverter circuit may be switched from an alternate conduction mode to a continuous cutoff mode; or operating modes of the three upper bridge switching transistors Q1, Q3, and Q5 in the inverter circuit may alternatively be switched from an alternate conduction mode to a continuous cutoff mode, and operating modes of the three lower bridge switching transistors Q2, Q4, and Q6 in the inverter circuit may alternatively be switched from an alternate conduction mode to a continuous conduction mode; or operating modes of the three upper bridge switching transistors Q1, Q3, and Q5 and the three lower bridge switching transistors Q2, Q4, and Q6 in the inverter circuit may alternatively be switched from an alternate conduction mode to a continuous cutoff mode.

In response to a current frequency of at least one phase winding in the three phase windings being less than or equal to a second frequency threshold, operating modes of the three upper bridge switching transistors Q1, Q3, and Q5 and the three lower bridge switching transistors Q2, Q4, and Q6 in the inverter circuit may be switched from an alternate conduction mode to a continuous cutoff mode; or operating modes of the three upper bridge switching transistors Q1, Q3, and Q5 or the three lower bridge switching transistors Q2, Q4, and Q6 in the inverter circuit may alternatively be switched from a continuous conduction mode to a continuous cutoff mode.

In this embodiment of this application, the first frequency threshold is greater than the second frequency threshold.

When a processor-level fault occurs in the motor control unit, a rotational speed of the drive motor is high, and the electric vehicle is prone to a traffic accident. To ensure safety, the motor control unit needs to be switched from a normal operating state to an ASC state or an SPO state. Because the rotational speed of the drive motor is positively correlated with a current frequency of any phase winding in the three phase windings of the drive motor, in response to the current frequency of the at least one phase winding in the three phase windings of the drive motor being greater than or equal to the first frequency threshold, the motor control unit needs to be switched from the normal operating state to the ASC state or the SPO state.

In this embodiment of this application, in response to a current frequency of at least one phase winding in the three phase windings of the drive motor being greater than or equal to the first frequency threshold, the motor control unit runs in an ASC state. In this embodiment of this application, when the motor control unit runs in the ASC state, the three upper bridge switching transistors Q1, Q3, and Q5 in the inverter circuit are in a continuous conduction mode or a short-circuit state, or the three lower bridge switching transistors Q2, Q4, and Q6 in the inverter circuit are in a continuous conduction mode or a short-circuit state.

In an embodiment, in response to a current frequency of at least one phase winding in the three phase windings being greater than or equal to the first frequency threshold, the three upper bridge switching transistors Q1, Q3, and Q5 in the inverter circuit may be switched from an alternate conduction mode to a continuous conduction mode, and the three lower bridge switching transistors Q2, Q4, and Q6 in the inverter circuit may be switched from an alternate conduction mode to a continuous cutoff mode. In an embodiment, in response to a current frequency of at least one phase winding in the three phase windings being greater than or equal to the first frequency threshold, the three upper bridge switching transistors Q1, Q3, and Q5 in the inverter circuit are switched from an alternate conduction mode to a continuous cutoff mode, and the three lower bridge switching transistors Q2, Q4, and Q6 in the inverter circuit are switched from an alternate conduction mode to a continuous conduction mode.

In this embodiment of this application, in response to the current frequency of the at least one phase winding in the three phase windings of the drive motor being greater than or equal to the first frequency threshold, a running status of the motor control unit is switched from a normal operating state to an SPO state. In this embodiment of this application, when the motor control unit runs in the SPO state, the operating modes of the three upper bridge switching transistors Q1, Q3, and Q5 and the three lower bridge switching transistors Q2, Q4, and Q6 in the inverter circuit are all in a continuous cutoff mode or a cutoff state.

In an embodiment, in response to a current frequency of at least one phase winding in the three phase windings being greater than or equal to the first frequency threshold, the operating modes of the three upper bridge switching transistors Q1, Q3, and Q5 and the three lower bridge switching transistors Q2, Q4, and Q6 in the inverter circuit may be switched from an alternate conduction mode to a continuous cutoff mode.

In this embodiment of this application, when a processor-level fault occurs in the motor control unit, the rotational speed of the drive motor is high, and in response to the current frequency of the at least one phase winding in the three phase windings of the drive motor being greater than or equal to the first frequency threshold, the running status of the motor control unit may be switched from a normal operating state to an ASC state, or may be switched from a normal operating state to an SPO state.

However, when the rotational speed of the drive motor is high, and the motor control unit runs in the SPO state, the drive motor generates larger unexpected torque. To avoid the foregoing problem, time for which the motor control unit runs in the SPO state needs to be limited. In this embodiment of this application, after the running status of the motor control unit is switched from the normal operating state to the SPO state, duration in which the motor control unit runs in the SPO state is less than first preset duration. The first preset duration is maximum time for which the motor control unit safely runs in the SPO state.

In addition, when the rotational speed of the drive motor is low, on one hand, a current of the drive motor is generally higher than a rated current when the inverter circuit runs in the ASC state. On the other hand, a sudden torque change may occur on the drive motor when the inverter circuit runs in the ASC state. Therefore, long-time running of the inverter circuit in the ASC state will increase a thermal failure risk of the motor control unit and drive motor. To avoid the foregoing problem, time for which the motor control unit runs in the ASC state needs to be limited. In this embodiment of this application, after the running status of the motor control unit is switched from the normal operating state to the ASC state, duration in which the motor control unit runs in the ASC state is less than second preset duration. The second preset duration is maximum time for which the motor control unit safely runs in the ASC state.

In this embodiment of this application, in response to the current frequency of the at least one phase winding in the three phase windings of the drive motor being less than or equal to the second frequency threshold, the running status of the motor control unit is switched from the ASC state to the SPO state.

In an embodiment, in response to a current frequency of at least one phase winding in the three phase windings of the drive motor being less than or equal to the second frequency threshold, the operating modes of the three upper bridge switching transistors Q1, Q3, and Q5 in the inverter circuit may be switched from a continuous conduction mode to a continuous cutoff mode, and the operating modes of the three lower bridge switching transistors Q2, Q4, and Q6 in the inverter circuit are in a continuous cutoff mode. In an embodiment, in response to a current frequency of at least one phase winding in the three phase windings of the drive motor being less than or equal to the second frequency threshold, the operating modes of the three upper bridge switching transistors Q1, Q3, and Q5 in the inverter circuit are a continuous cutoff mode, and the operating modes of the three lower bridge switching transistors Q2, Q4, and Q6 in the inverter circuit are switched from a continuous conduction mode to a continuous cutoff mode.

In this embodiment of this application, in response to the current frequency of the at least one phase winding in the three phase windings of the drive motor being less than or equal to the second frequency threshold, the running status of the motor control unit may be switched from a normal operating state to an SPO state. In response to the current frequency of the at least one phase winding in the three phase windings being less than or equal to the second frequency threshold, the operating modes of the three upper bridge switching transistors Q1, Q3, and Q5 and the three lower bridge switching transistors Q2, Q4, and Q6 in the inverter circuit may be switched from an alternate conduction mode to a continuous cutoff mode.

In this embodiment of this application, the first frequency threshold is greater than the second frequency threshold. In an embodiment, the first frequency threshold and the second frequency threshold may be unchanged. In an embodiment, the first frequency threshold and the second frequency threshold are adjusted with an input voltage of the inverter circuit. In response to a current frequency of at least one phase winding in the three phase windings of the drive motor being greater than or equal to the first frequency threshold, the running status of the motor control unit is switched from a normal operating state to an ASC state. Then, the rotational speed of the drive motor decreases. In response to the current frequency of the at least one phase winding in the three phase windings of the drive motor being less than or equal to the second frequency threshold, the running status of the motor control unit is switched from the ASC state to an SPO state.

When a processor-level fault occurs in the motor control unit provided in this embodiment of this application, the motor control unit detects the rotational speed of the drive motor by detecting the current frequency of the at least one phase winding in the three phase windings of the drive motor. When the rotational speed of the drive motor is high, the motor control unit runs in the ASC state, and when the rotational speed of the drive motor is low, the motor control unit runs in the SPO state. In addition, when the processor-level fault occurs in the motor control unit provided in this embodiment of this application, the motor control unit detects the rotational speed of the drive motor by detecting the current frequency of the at least one phase winding in the three phase windings of the drive motor. When the rotational speed of the drive motor is high, the motor control unit runs in the SPO state, and when the rotational speed of the drive motor is low, the motor control unit runs in the ASC state. In addition, the motor control unit provided in this embodiment of this application can further limit duration in which the motor control unit runs in the ASC state or the SPO state, to reduce a thermal failure risk of the motor control unit and the drive motor, and avoid generation of unexpected torque, thereby improving safety of the electric vehicle.

A signal obtained by the motor control unit provided in this embodiment of this application through detection based on the current frequency of the at least one phase winding in the three phase windings of the drive motor has strong anti-interference capability. This can improve control accuracy of the motor control unit. In addition, a processing circuit structure of the signal obtained through detection based on the current frequency of the at least one phase winding in the three phase windings of the drive motor is simple. This can improve stability of the motor control unit and reduce costs of the motor control unit.

The motor control unit provided in this embodiment of this application may be applied to a powertrain or an electric vehicle, or may be applied to an electromobile or another electric device. The powertrain and the motor control unit of the electric vehicle provided in this embodiment of this application have strong anti-interference capability of the signal obtained through detection based on the current frequency of the at least one phase winding in the three phase windings of the drive motor. This can improve control accuracy of the powertrain and the electric vehicle. In addition, the processing circuit structure of the signal obtained through detection based on the current frequency of the at least one phase winding in the three phase windings of the drive motor is simple. This can improve stability of the powertrain and the electric vehicle and reduce costs of the motor control unit.

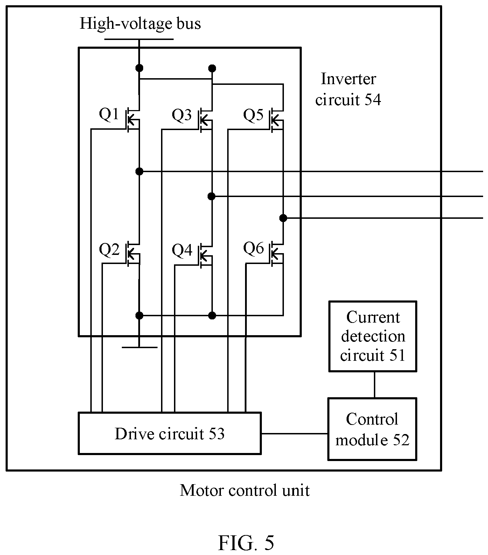

FIG. 5 is a diagram of a structure of another motor control unit according to an embodiment of this application. As shown in FIG. 5, the motor control unit includes a current detection circuit 51, a control module 52, a drive circuit 53, and an inverter circuit 54. An output end of the current detection circuit 51 is connected to an input end of the control module 52, an output end of the control module 52 is connected to an input end of the drive circuit 53, and an output end of the drive circuit 53 is connected to the inverter circuit 54. Specifically, the output end of the drive circuit 53 is connected to control ends of six switching transistors Q1 to Q6 in the inverter circuit 54. For example, when the switching transistor is an MOSFET, the control end of the switching transistor is a gate of the MOSFET. It should be understood that the motor control unit provided in this embodiment of this application may further include another type of switching transistor, and a control end of the another type of switching transistor may have another name.

The inverter circuit 54 is configured to receive power supplied by a high-voltage bus. In this embodiment of this application, the high-voltage bus receives power supply from a vehicle-mounted power battery. For example, one ends of the three upper bridge switching transistors Q1, Q3, and Q5 are connected to the high-voltage bus. In an embodiment, one ends of the three lower bridge switching transistors Q2, Q4, and Q6 are connected to the high-voltage bus.

The current detection circuit 51 is configured to detect a current frequency of at least one phase winding in three phase windings of a drive motor. In response to a current frequency of at least one phase winding in the three phase windings of the drive motor being greater than or equal to a first frequency threshold, the current detection circuit 51 outputs a first detection signal indicating that a rotational speed of the drive motor is greater than or equal to a first threshold. If the rotational speed of the drive motor is greater than or equal to the first threshold, it indicates that the rotational speed of the drive motor is high. In response to a current frequency of at least one phase winding in the three phase windings of the drive motor being less than or equal to a second frequency threshold, the current detection circuit 51 may output a second detection signal indicating that a rotational speed of the drive motor is less than or equal to a second threshold. If the rotational speed of the drive motor is less than or equal to the second threshold, it indicates that the rotational speed of the drive motor is low. The first threshold is greater than the second threshold.

In this embodiment of this application, at the same time, the current detection circuit 51 may output a detection signal, and the detection signal may be a first detection signal or a second detection signal. In an embodiment, the first detection signal may be at a high level, and the second detection signal may be at a low level. In an embodiment, the first detection signal may be at a low level, and the second detection signal may be at a high level.

In an embodiment, regardless of whether a processor-level fault occurs in the motor control unit, the current detection circuit 51 can always run in an operating state, thereby improving timeliness of fault handling by the motor control unit. For example, when no processor-level fault occurs in the motor control unit, the control module 52, the drive circuit 53, and the inverter circuit 54 do not respond to the first detection signal or the second detection signal output by the current detection circuit 51. That is, the control module 52, the drive circuit 53, and the inverter circuit 54 may ignore the first detection signal or the second detection signal output by the current detection circuit 51. In an embodiment, the current detection circuit 51 is in an operating state only when a processor-level fault occurs in the motor control unit. This reduces complexity of a control policy of the motor control unit. For example, when no processor-level fault occurs in the motor control unit, the current detection circuit 51 is in a non-operating state. When a processor-level fault occurs in the motor control unit, the current detection circuit 51 is in an operating state.

In this embodiment of this application, the control module 52 is configured to output a first control signal or a second control signal based on the detection signal provided by the current detection circuit 51. The first control signal is used to control the motor control unit to run in an ASC state. The second control signal is used to control the motor control unit to run in an SPO state.

In this embodiment of this application, the control module 52 is configured to output the first control signal or the second control signal. The first control signal is used to control the motor control unit to run in the ASC state. The second control signal is used to control the motor control unit to run in the SPO state. Specifically, the control module 52 outputs the first control signal or the second control signal based on the first detection signal or the second detection signal output by the current detection circuit 51.

In an embodiment, the control module 52 is configured to output the first control signal in response to the first detection signal output by the current detection circuit 51. In response to the first control signal, the motor control unit runs in an ASC state. Specifically, in response to a current frequency of at least one phase winding in the three phase windings of the drive motor being greater than or equal to the first frequency threshold, the current detection circuit 51 outputs the first detection signal indicating that the rotational speed of the drive motor is greater than or equal to the first threshold, and the control module 52 outputs the first control signal for controlling the motor control unit to run in the ASC state. In addition, the control module 52 is configured to output the second control signal in response to the second detection signal output by the current detection circuit 51. In response to the second control signal, the motor control unit runs in an SPO state. Specifically, in response to a current frequency of at least one phase winding in the three phase windings of the drive motor being less than or equal to the second frequency threshold, the current detection circuit 51 outputs the second detection signal indicating that the rotational speed of the drive motor is less than or equal to the second threshold, and the control module 52 outputs the second control signal for controlling the motor control unit to run in the SPO state.

In an embodiment, the control module 52 is configured to output the second control signal in response to the first detection signal output by the current detection circuit 51. In response to the second control signal, the motor control unit runs in an SPO state. Specifically, in response to a current frequency of at least one phase winding in the three phase windings of the drive motor being greater than or equal to the first frequency threshold, the current detection circuit 51 outputs the first detection signal indicating that the rotational speed of the drive motor is greater than or equal to the first threshold, and the control module 52 outputs the second control signal for controlling the motor control unit to run in the SPO state. In addition, the control module 52 is configured to output the first control signal in response to the second detection signal output by the current detection circuit 51. In response to the first control signal, the motor control unit runs in an ASC state. Specifically, in response to a current frequency of at least one phase winding in the three phase windings of the drive motor being less than or equal to the second frequency threshold, the current detection circuit 51 outputs the second detection signal indicating that the rotational speed of the drive motor is less than or equal to the second threshold, and the control module 52 outputs the first control signal for controlling the motor control unit to run in the ASC state.

In this embodiment of this application, in response to the current frequency of the at least one phase winding in the three phase windings of the drive motor being greater than or equal to the first frequency threshold, the control module 52 may control the motor control unit to run in the ASC state, or may control the motor control unit to run in the SPO state. In response to a current frequency of at least one phase winding in the three phase windings of the drive motor being less than the second frequency threshold, the control module 52 may control the motor control unit to run in the ASC state, or may control the motor control unit to run in the SPO state.

The drive circuit 53 is configured to control running modes of the upper bridge switching transistors and the lower bridge switching transistors in the inverter circuit 54. Specifically, the motor control unit runs in the ASC state, and the drive circuit 53 controls the three upper bridge switching transistors Q1, Q3, and Q5 in the inverter circuit 54 to run in a continuous cutoff mode and the three lower bridge switching transistors Q2, Q4, and Q6 in the inverter circuit 54 to run in a continuous conduction mode; or the drive circuit 53 controls the three upper bridge switching transistors Q1, Q3, and Q5 in the inverter circuit 54 to run in a continuous conduction mode and the three lower bridge switching transistors Q2, Q4, and Q6 in the inverter circuit 54 to run in a continuous cutoff mode. Specifically, the motor control unit runs in the SPO state, and the drive circuit 53 controls the three upper bridge switching transistors Q1, Q3, and Q5 in the inverter circuit 54 to run in a continuous cutoff mode and the three lower bridge switching transistors Q2, Q4, and Q6 in the inverter circuit 54 to run in a continuous cutoff mode. The motor control unit runs in a normal operating state, and the drive circuit 53 controls the three upper bridge switching transistors Q1, Q3, and Q5 and the three lower bridge switching transistors Q2, Q4, and Q6 in the inverter circuit 54 to run in an alternate conduction mode.

In this embodiment of this application, the drive circuit 53 is configured to separately output one or more drive signals to control ends of the six switching transistors Q1 to Q6 in the inverter circuit 54. In an embodiment, the drive circuit 53 is configured to: in response to the first control signal output by the control module 52, control the three upper bridge switching transistors Q1, Q3, and Q5 in the inverter circuit 54 to run in a continuous cutoff mode and the three lower bridge switching transistors Q2, Q4, and Q6 in the inverter circuit 54 to run in a continuous conduction mode. In an embodiment, the drive circuit 53 is configured to: in response to the first control signal output by the control module 52, control the three upper bridge switching transistors Q1, Q3, and Q5 in the inverter circuit 54 to run in a continuous conduction mode and the three lower bridge switching transistors Q2, Q4, and Q6 in the inverter circuit 54 to run in a continuous cutoff mode. For example, in response to a current frequency of at least one phase winding in the three phase windings of the drive motor being greater than or equal to a first frequency threshold, the current detection circuit 51 outputs a first detection signal indicating that a rotational speed of the drive motor is greater than or equal to a first threshold; the control module 52 outputs a first control signal for controlling the motor control unit to run in an ASC state; and the drive circuit 53 controls the three upper bridge switching transistors Q1, Q3, and Q5 in the inverter circuit 54 to run in a continuous cutoff mode and the three lower bridge switching transistors Q2, Q4, and Q6 in the inverter circuit 54 to run in a continuous conduction mode; or the drive circuit 53 controls the three upper bridge switching transistors Q1, Q3, and Q5 in the inverter circuit 54 to run in a continuous conduction mode and the three lower bridge switching transistors Q2, Q4, and Q6 in the inverter circuit 54 to run in a continuous cutoff mode.

In an embodiment, the drive circuit 53 is configured to: in response to the second control signal output by the control module 52, control the three upper bridge switching transistors Q1, Q3, and Q5 in the inverter circuit 54 to run in a continuous cutoff mode and the three lower bridge switching transistors Q2, Q4, and Q6 in the inverter circuit 54 to run in a continuous cutoff mode. For example, in response to a current frequency of at least one phase winding in the three phase windings of the drive motor being less than or equal to a second frequency threshold, the current detection circuit 51 outputs a second detection signal indicating that a rotational speed of the drive motor is less than or equal to a second threshold; the control module 52 outputs a second control signal for controlling the motor control unit to run in an SPO state; and the drive circuit 53 controls the three upper bridge switching transistors Q1, Q3, and Q5 in the inverter circuit 54 to run in a continuous cutoff mode and the three lower bridge switching transistors Q2, Q4, and Q6 in the inverter circuit 54 to run in a continuous cutoff mode.

Specifically, the drive circuit 53 is configured to output a first-type drive signal, a second-type drive signal, and a third-type drive signal based on a running status of the motor control unit. When the motor control unit runs in a normal operating state, the drive circuit 53 outputs the first-type drive signal to control the inverter circuit 54 to run in a normal operating mode. For example, the three upper bridge switching transistors Q1, Q3, and Q5 and the three lower bridge switching transistors Q2, Q4, and Q6 in the inverter circuit 54 run in an alternate conduction mode. When the motor control unit runs in an ASC state, the drive circuit 53 outputs a second-type control signal to control the three upper bridge switching transistors Q1, Q3, and Q5 in the inverter circuit 54 to run in a continuous cutoff mode and the three lower bridge switching transistors Q2, Q4, and Q6 in the inverter circuit 54 to run in a continuous conduction mode; or control the three upper bridge switching transistors Q1, Q3, and Q5 in the inverter circuit 54 to run in a continuous conduction mode and the three lower bridge switching transistors Q2, Q4, and Q6 in the inverter circuit 54 to run in a continuous cutoff mode. When the motor control unit runs in an SPO state, the drive circuit 53 outputs the third-type drive signal to control the three upper bridge switching transistors Q1, Q3, and Q5 in the inverter circuit 54 to run in a continuous cutoff mode and the three lower bridge switching transistors Q2, Q4, and Q6 in the inverter circuit 54 to run in a continuous cutoff mode.

When no processor-level fault occurs in the motor control unit of the electric vehicle, the motor control unit runs in a normal operating state, the control module 52 receives an instruction of a DSP in the motor control unit, and the drive circuit 53 outputs the first-type drive signal to drive the inverter circuit 54 to run in a normal operating mode.

When a processor-level fault occurs in the motor control unit of the electric vehicle, the control module 52 cannot receive an instruction of the DSP in the motor control unit. In this case, if the rotational speed of the drive motor is not controlled, an accident is prone to occur. The control module 52 in the motor control unit provided in this embodiment of this application can control, based on a result of comparison between the current frequency of the at least one phase winding in the three phase windings of the drive motor and the first frequency threshold and the second frequency threshold, the drive circuit 53 to output the second-type drive signal or the third-type drive signal for adjusting operating modes of the upper bridge switching transistors or the lower bridge switching transistors in the inverter circuit 54.

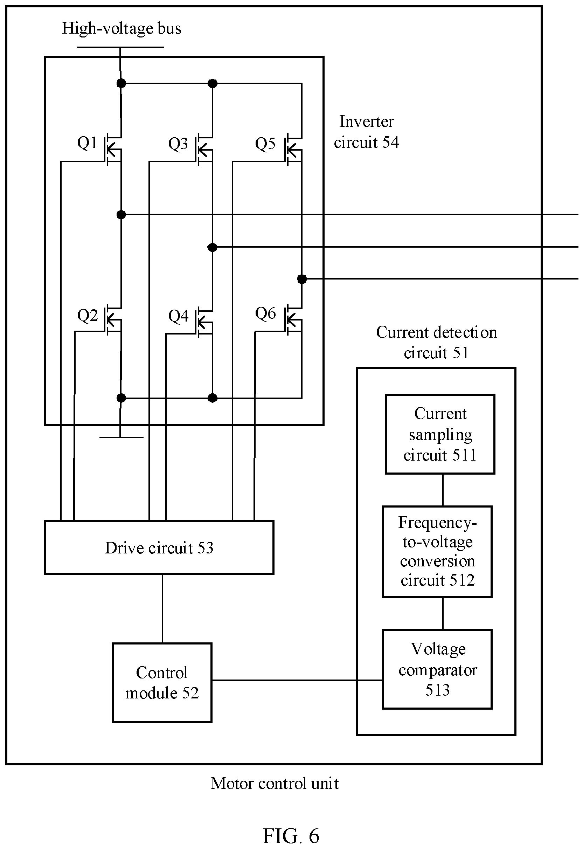

FIG. 6 is a diagram of a structure of still another motor control unit according to an embodiment of this application. As shown in FIG. 6, a current detection circuit 51 may include a current sampling circuit 511, a frequency-to-voltage conversion circuit 512, and a voltage comparator 513. An output end of the current sampling circuit 511 is connected to an input end of the frequency-to-voltage conversion circuit 512, an output end of the frequency-to-voltage conversion circuit 512 is connected to an input end of the voltage comparator 513, and an output end of the voltage comparator 513 is connected to an input end of a control module 52.

The current sampling circuit 511 is configured to detect a frequency of an alternating current of at least one phase winding in three phase windings of a drive motor, and is configured to output an alternating current signal indicating the frequency. In this embodiment of this application, the current sampling circuit 511 may output the alternating current signal based on the frequency of the alternating current flowing through the at least one phase winding in the three phase windings of the drive motor.

The frequency-to-voltage conversion circuit 512 is configured to convert an alternating current signal into a direct current signal. Specifically, the frequency-to-voltage conversion circuit 512 outputs the direct current signal based on a result of comparison between a voltage of the alternating current signal and a first reference voltage. In other words, the frequency-to-voltage conversion circuit 512 is configured to: compare the voltage of the alternating current signal with the first reference voltage, and output the direct current signal based on the comparison result.

The voltage comparator 513 may output a first detection signal or a second detection signal based on a result of comparison between a voltage of the direct current signal and a second reference voltage. In other words, the voltage comparator 513 is configured to: compare the voltage of the direct current signal with the second reference voltage, and output the first detection signal or the second detection signal based on the comparison result.

In this embodiment of this application, the current sampling circuit 511 includes one or more current samplers. There is a spacing between each current sampler and any electrical connection line between bridge arm midpoints of three bridge arms in an inverter circuit 54 and the three phase windings of the drive motor. For example, a first current sampler is one of the one or more current samplers, and a first phase winding is one phase winding in the three phase windings, a first electrical connection line is an electrical connection line between the first winding and a corresponding bridge arm midpoint. The first current sampler is configured to detect an alternating current flowing through the first phase winding. A distance between the first current sampler and the first electrical connection line is less than or equal to a third threshold. In other words, the distance between the first current sampler and the first electrical connection line is very small.

In this embodiment of this application, the current sampler may detect a current frequency of any phase winding of the drive motor in an induction manner. Specifically, the current sampler and any phase winding of the drive motor are disposed at a spacing. The current sampler does not need to be electrically connected to any phase winding of the drive motor. For example, the first current sampler is disposed near the first electrical connection line, to detect the alternating current flowing through the first electrical connection line, and further detect a current frequency of the first phase winding. In the motor control unit, a powertrain, and an electric vehicle provided in this embodiment of this application, the current sampler is used to implement non-contact detection on a rotational speed of the drive motor, and the current sampler is not in contact with or electrically connected to any phase winding of the drive motor, thereby improving detection accuracy and reducing complexity of the detection circuit. In addition, the current sampler is located on a low-voltage side. This complies with safety regulations, and avoids space occupation caused by isolation and packaging.

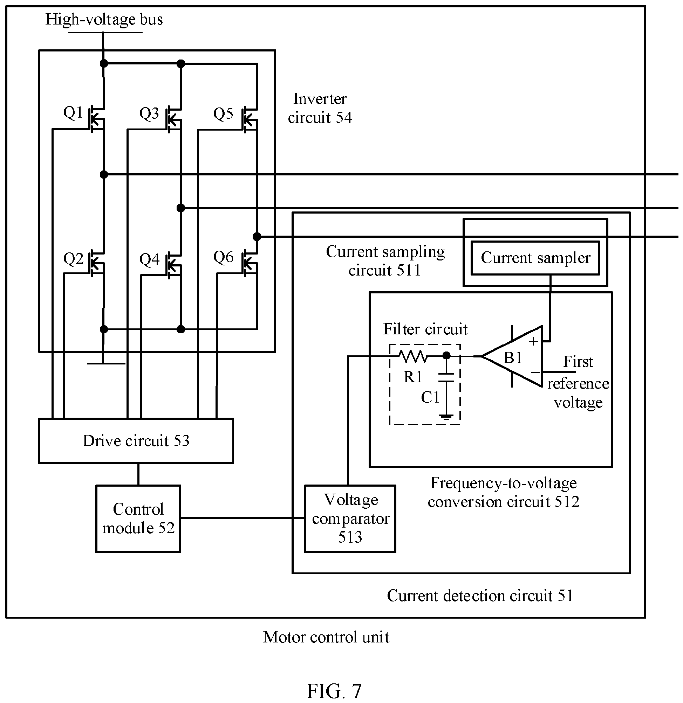

FIG. 7 is a diagram of a structure of still another motor control unit according to an embodiment of this application. As shown in FIG. 7, a current sampling circuit 511 includes a current sampler. A frequency-to-voltage conversion circuit 512 includes a comparator B1 and a filter circuit. A first input end of the comparator B1 is connected to the current sampler, a second input end of the comparator B1 is connected to a first reference voltage, and the filter circuit is separately connected to an output end of the comparator B1 and an input end of a voltage comparator 513.

The first input end of the comparator B1 may be a positive input end, or may be a negative input end. Similarly, the second input end of the comparator B1 may be a positive input end, or may be a negative input end. FIG. 7 is described by using an example in which the first input end of the comparator B1 is a positive input end and the second input end of the comparator B1 is a negative input end. The comparator B1 compares a voltage of an alternating current signal collected by the current sampler with the first reference voltage. If the voltage of the alternating current signal collected by the current sampler is greater than or equal to the first reference voltage, the comparator B1 outputs a high level. If the voltage of the alternating current signal collected by the current sampler is less than a second reference voltage, the comparator B1 outputs a low level. The alternating current signal detected by a current detection circuit 51 is a sinusoidal signal. It can be learned that after the alternating current signal detected by the current detection circuit 51 passes through the comparator B1, the sinusoidal signal may be converted into a square wave signal. Duty cycles of the high level and the low level in the square wave signal are related to the first reference voltage and a voltage and a frequency of the sinusoidal signal detected by the current detection circuit 51.

The filter circuit may convert the square wave signal output by the comparator B1 into a direct current signal.

The filter circuit may include an RC filter structure. The filter circuit may include one RC filter structure, or may include a plurality of RC filter structures. FIG. 7 is a diagram of a filter circuit including an RC filter structure. As shown in FIG. 7, the filter circuit may include a first resistor R1 and a capacitor C1. One end of the first resistor R1 is connected to an output end of a comparator B1, the other end of the first resistor R1 is separately connected to an input end of a voltage comparator 513 and one end of the capacitor C1, and the other end of the capacitor C1 is connected to a ground end. When the comparator B1 outputs a high level, the capacitor C1 is charged. When the comparator B1 outputs a low level, the capacitor C1 discharges.

Alternatively, the filter circuit may be a digital-to-analog converter that can convert a square wave signal into a direct current signal. The filter circuit may alternatively be another component or circuit that can convert a square wave signal into a direct current signal. This is not limited herein.

The first reference voltage may receive power supply from two independent power supplies. The first reference voltage may be supplied by a power supply with a higher voltage in the two independent power supplies. Voltages of the two independent power supplies are different. In a normal case, the power supply with a higher voltage supplies power to the first reference voltage. When the power supply with a higher voltage cannot supply power, the power supply with a lower voltage supplies power to the first reference voltage. That the power supply cannot supply power may be that the power supply is faulty, or may be another case. This is not limited herein.

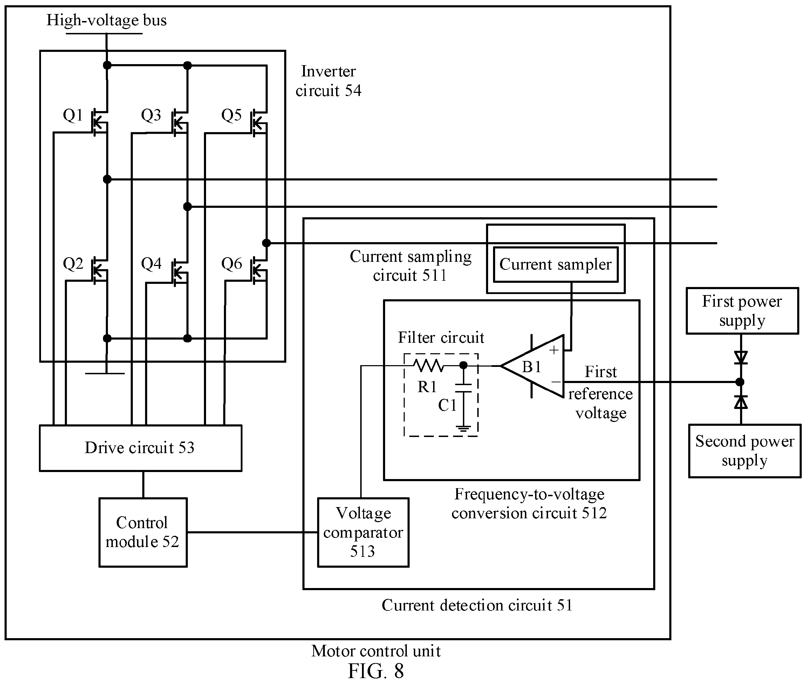

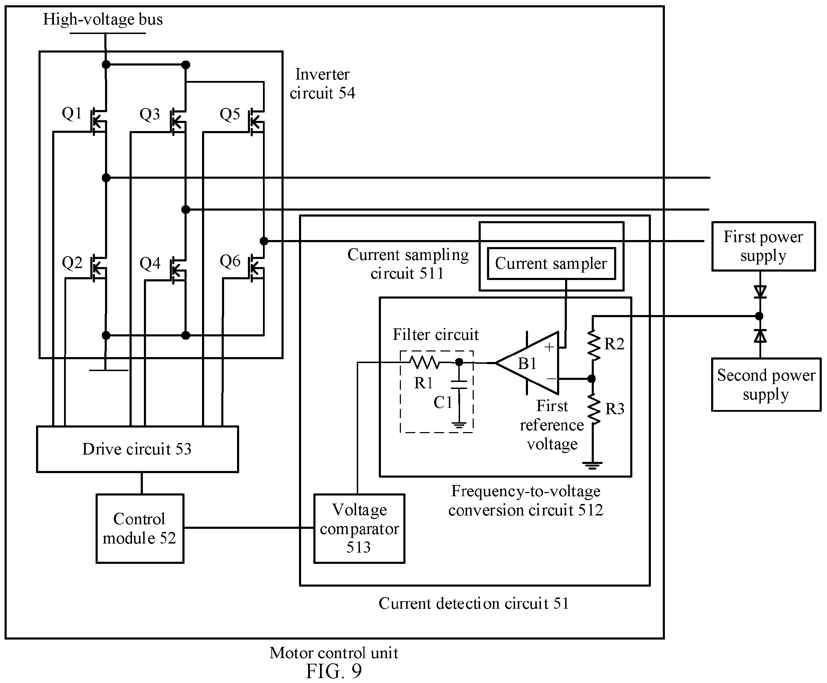

Refer to FIG. 8. A second input end of a comparator B1 in FIG. 8 is directly connected to two independent power supplies, that is, a first power supply and a second power supply. Refer to FIG. 9. A second input end of a comparator B1 in FIG. 9 is indirectly connected to two independent power supplies. As shown in FIG. 9, a frequency-to-voltage conversion circuit 512 may further include a second resistor R2 and a third resistor R3. A second input end of the comparator B1 is connected to the two independent power supplies by using the second resistor R2, and is connected to a ground end by using the third resistor R3. The first reference voltage is R3*V1/(R2+R3). In R3*V1/(R2+R3), R2 is a resistance value of the second resistor R2, R3 is a resistance value of the third resistor R3, and V1 is a voltage of the first power supply or the second power supply.

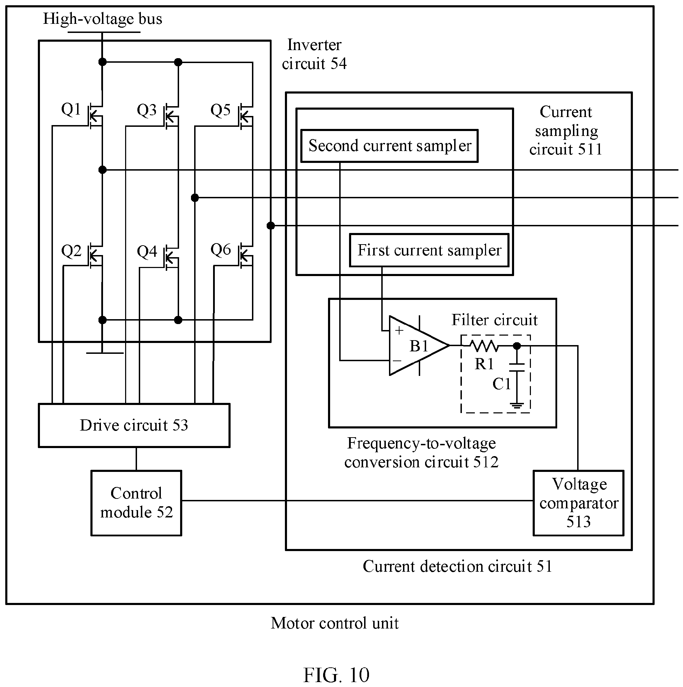

FIG. 10 is a diagram of a structure of still another motor control unit according to an embodiment of this application. As shown in FIG. 10, a current sampling circuit 511 may include a first current sampler and a second current sampler, and a frequency-to-voltage conversion circuit 512 may include a comparator B1 and a filter circuit. A first input end of the comparator B1 is connected to the first current sampler, a second input end of the comparator B1 is connected to the second current sampler, and the filter circuit is separately connected to an output end of the comparator B1 and an input end of a voltage comparator 513.

FIG. 10 is described by using an example in which the first input end of the comparator B1 is a positive input end and the second input end of the comparator B1 is a negative input end. The comparator B1 compares a voltage of an alternating current signal collected by the first current sampler with a voltage of an alternating current signal collected by the second current sampler. If the voltage of the alternating current signal collected by the first current sampler is greater than or equal to the voltage of the alternating current signal collected by the second current sampler, the comparator B1 outputs a high level. If the voltage of the alternating current signal collected by the first current sampler is less than the voltage of the alternating current signal collected by the second current sampler, the comparator B1 outputs a low level. It can be learned that after a sinusoidal signal detected by the current sampling circuit 511 passes through the comparator B1, the sinusoidal signal may be converted into a square wave signal. Duty cycles of the high level and the low level in the square wave signal are related to a voltage and a frequency of the alternating current signal collected by the first current sampler and a voltage and a frequency of the alternating current signal collected by the second current sampler. For other descriptions, refer to related descriptions corresponding to FIG. 7.

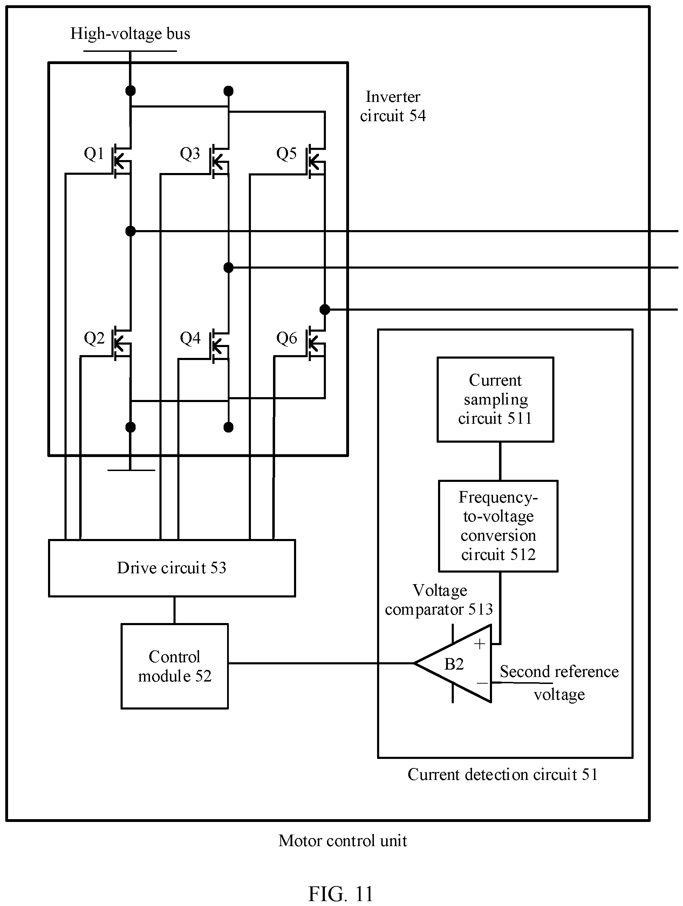

FIG. 11 is a diagram of a structure of still another motor control unit according to an embodiment of this application. As shown in FIG. 11, a first input end of a voltage comparator 513 is connected to a second reference voltage, a second input end of the voltage comparator 513 is connected to an output end of a frequency-to-voltage conversion circuit 512, and an output end of the voltage comparator 513 is connected to an input end of a control module 52.

The first input end of the voltage comparator 513 may be a positive input end, or may be a negative input end. Similarly, the second input end of the voltage comparator 513 may be a positive input end, or may be a negative input end. FIG. 11 is described by using an example in which the first input end of the voltage comparator 513 is a negative input end and the second input end of the voltage comparator 513 is a positive input end. The voltage comparator 513 compares a voltage of a direct current signal output by the frequency-to-voltage conversion circuit 512 with the second reference voltage. If the second reference voltage is greater than the voltage of the direct current signal, the voltage comparator 513 outputs a low level. If the second reference voltage is less than or equal to the voltage of the direct current signal, the voltage comparator 513 outputs a high level. It can be learned that after the direct current signal output by the frequency-to-voltage conversion circuit 512 passes through the voltage comparator 513, the high level or the low level can be output.

In an embodiment, the second reference voltage may receive power supply from two independent power supplies. For detailed descriptions, refer to related descriptions of receiving power supply from two independent power supplies by using the first reference voltage. In this case, a value of the second reference voltage is unchanged, and a first frequency threshold and a second frequency threshold are also unchanged.

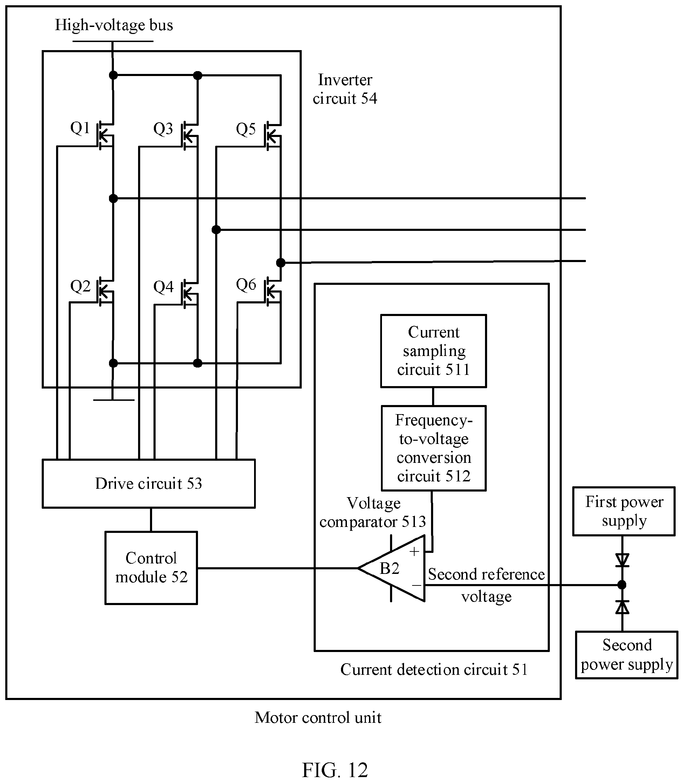

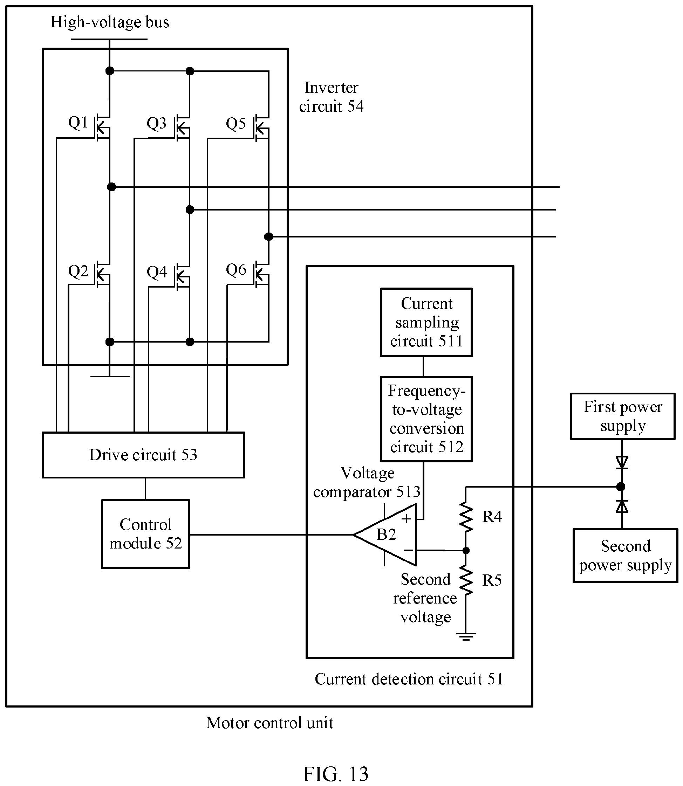

Refer to FIG. 12. A first input end of a voltage comparator 513 in FIG. 12 is directly connected to two independent power supplies, that is, a first power supply and a second power supply. Refer to FIG. 13. A first input end of a voltage comparator 513 in FIG. 13 is indirectly connected to two independent power supplies. As shown in FIG. 13, a current detection circuit 51 may further include a fourth resistor R4 and a fifth resistor R5. The first input end of the voltage comparator 513 is connected to the two independent power supplies by using the fourth resistor R4, and is connected to a ground end by using the fifth resistor R5. A second reference voltage is R5*V2/(R4+R5). In R5*V2/(R4+R5), R4 is a resistance value of the fourth resistor R4, R5 is a resistance value of the fifth resistor R5, and V2 is a voltage of the first power supply or the second power supply.

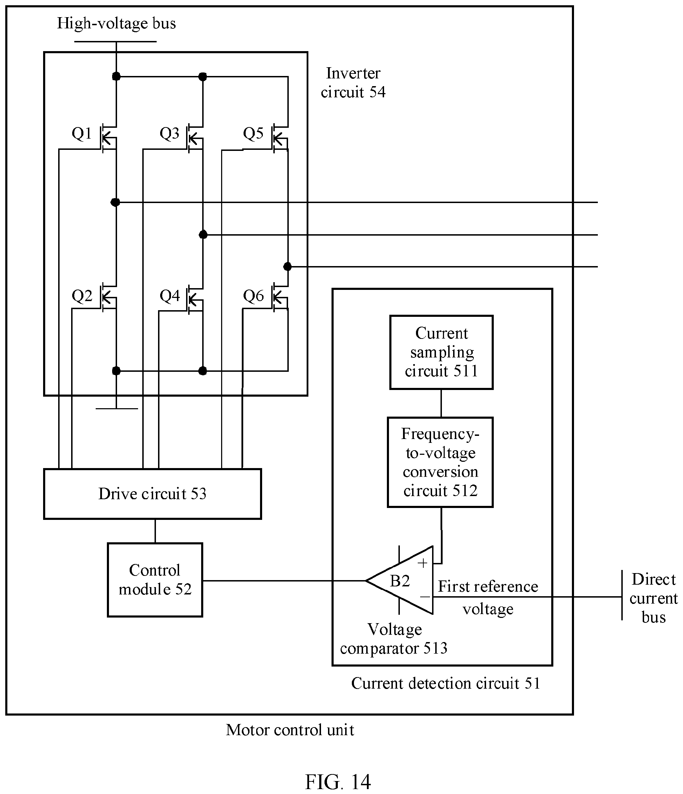

In an embodiment, the second reference voltage is adjusted with an input voltage of an inverter circuit 54. As shown in FIG. 14, a first input end of a voltage comparator 513 is connected to a direct current bus. A second reference voltage is a voltage of the direct current bus. The direct current bus is powered by a high-voltage bus. In this case, the second reference voltage varies with a change of a voltage of the high-voltage bus, and a first frequency threshold and a second frequency threshold also varies with a change of the voltage of the high-voltage bus.

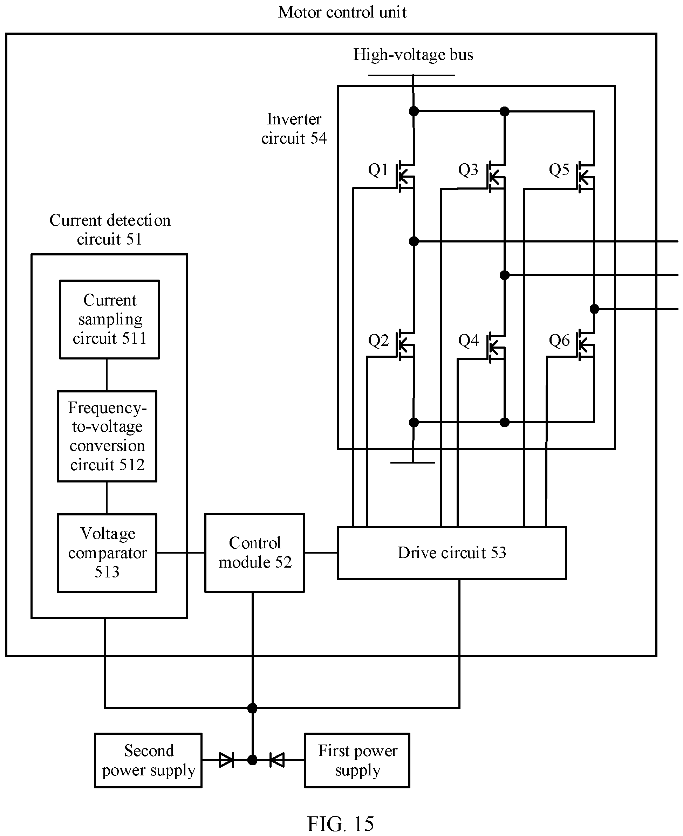

FIG. 15 is a diagram of a structure of still another motor control unit according to an embodiment of this application. As shown in FIG. 15, a current detection circuit 51, a control module 52, and a drive circuit 53 are separately connected to two independent power supplies, that is, a first power supply and a second power supply. An inverter circuit 54 is connected to a high-voltage bus.

The current detection circuit 51 is connected to the two independent power supplies. That is, a current sampling circuit 511, namely, a current sampler, and a frequency-to-voltage conversion circuit 512 may be connected to the two independent power supplies; or a current sampling circuit 511, a frequency-to-voltage conversion circuit 512, and a voltage comparator 513 may be connected to the two independent power supplies.

It should be understood that the first power supply and the second power supply in the figure may be low-voltage power supplies. Voltages of the first power supply and the second power supply may be 12V, or may be other values. The voltage values of the first power supply and the second power supply are not specifically limited herein. The first power supply and the second power supply may be battery power supplies, or may be power supplies obtained by performing direct current-direct current conversion on the high-voltage bus. The voltages of the first power supply and the second power supply are unchanged. A power battery in an electric vehicle may supply power to the first power supply or the second power supply through the high-voltage bus.

In the foregoing specific implementations, the objectives, technical solutions, and beneficial effect of this application are further described in detail. It should be understood that the foregoing descriptions are merely specific implementations of this application, but are not intended to limit the protection scope of this application. Any modification, equivalent replacement, improvement, or the like made based on the technical solutions of this application shall fall within the protection scope of this application.

## Claims

1. A motor control unit, configured to control a drive motor of an electric vehicle, wherein the drive motor comprises three phase windings, the motor control unit comprises an inverter circuit, the inverter circuit supplies power to the drive motor, the inverter circuit comprises three bridge arms, each bridge arm comprises an upper bridge switching transistor and a lower bridge switching transistor, and bridge arm midpoints of the three bridge arms are respectively connected to the three phase windings of the drive motor, wherein
in response to a current frequency of at least one phase winding in the three phase windings being greater than or equal to a first frequency threshold, operating modes of three upper bridge switching transistors are switched from an alternate conduction mode to a continuous conduction mode, and operating modes of three lower bridge switching transistors are switched from an alternate conduction mode to a continuous cutoff mode; or operating modes of three upper bridge switching transistors are switched from an alternate conduction mode to a continuous cutoff mode, and operating modes of three lower bridge switching transistors are switched from an alternate conduction mode to a continuous conduction mode; or operating modes of three upper bridge switching transistors and three lower bridge switching transistors are switched from an alternate conduction mode to a continuous cutoff mode; or
in response to a current frequency of at least one phase winding in the three phase windings being less than or equal to a second frequency threshold, operating modes of three upper bridge switching transistors and three lower bridge switching transistors are switched from an alternate conduction mode to a continuous cutoff mode; or operating modes of three upper bridge switching transistors or three lower bridge switching transistors are switched from a continuous conduction mode to a continuous cutoff mode; and
the first frequency threshold is greater than the second frequency threshold.

2. The motor control unit according to claim 1, wherein the motor control unit comprises a current detection circuit, and the current detection circuit is configured to: detect a current frequency of at least one phase winding in the three phase windings; and
in response to a current frequency of at least one phase winding in the three phase windings being greater than or equal to the first frequency threshold, output a first detection signal indicating that a rotational speed of the drive motor is greater than or equal to a first threshold; or
in response to a current frequency of at least one phase winding in the three phase windings being less than or equal to the second frequency threshold, output a second detection signal indicating that a rotational speed of the drive motor is less than or equal to a second threshold; and
the first threshold is greater than the second threshold.

3. The motor control unit according to claim 2, wherein the motor control unit comprises a control module, and the control module is configured to:
in response to the first detection signal, output a first control signal for controlling the motor control unit to run in an active short circuit state or a second control signal for controlling the motor control unit to run in a safety pulse off state; or
in response to the second detection signal, output a second control signal for controlling the motor control unit to run in a safety pulse off state, wherein
when the motor control unit runs in an active short circuit state, the operating modes of the three upper bridge switching transistors are all a continuous conduction mode, and the operating modes of the three lower bridge switching transistors are all a continuous cutoff mode; or the operating modes of the three upper bridge switching transistors are all a continuous cutoff mode, and the operating modes of the three lower bridge switching transistors are all a continuous conduction mode; or
when the motor control unit runs in a safety pulse off state, the operating modes of the three upper bridge switching transistors and the three lower bridge switching transistors are all a continuous cutoff mode.

4. The motor control unit according to claim 3, wherein the motor control unit comprises a drive circuit, and the drive circuit is configured to:
in response to the first control signal, control the operating modes of the three upper bridge switching transistors to switch from an alternate conduction mode to a continuous conduction mode and the operating modes of the three lower bridge switching transistors to switch from an alternate conduction mode to a continuous cutoff mode; or control the operating modes of the three upper bridge switching transistors to switch from an alternate conduction mode to a continuous cutoff mode and the operating modes of the three lower bridge switching transistors to switch from an alternate conduction mode to a continuous conduction mode; or
in response to the second control signal, control the operating modes of the three upper bridge switching transistors and the three lower bridge switching transistors to switch from an alternate conduction mode to a continuous cutoff mode; or control the operating modes of the three upper bridge switching transistors or the three lower bridge switching transistors to switch from a continuous conduction mode to a continuous cutoff mode.

5. The motor control unit according to any one of claims 1 to 4, wherein the motor control unit comprises the control module, and the control module is configured to:
in response to a current frequency of at least one phase winding in the three phase windings being greater than or equal to the first frequency threshold, control the motor control unit to run in an active short circuit state or a safety pulse off state; or
in response to a current frequency of at least one phase winding in the three phase windings being less than or equal to the second frequency threshold, control the motor control unit to run in a safety pulse off state.

6. The motor control unit according to any one of claims 1 to 5, wherein the motor control unit comprises the drive circuit, and the drive circuit is configured to:
in response to a current frequency of at least one phase winding in the three phase windings being greater than or equal to the first frequency threshold, control the operating modes of the three upper bridge switching transistors to switch from an alternate conduction mode to a continuous conduction mode and the operating modes of the three lower bridge switching transistors to switch from an alternate conduction mode to a continuous cutoff mode; or control the operating modes of the three upper bridge switching transistors to switch from an alternate conduction mode to a continuous cutoff mode and the operating modes of the three lower bridge switching transistors to switch from an alternate conduction mode to a continuous conduction mode; or control the operating modes of the three upper bridge switching transistors and the three lower bridge switching transistors to switch from an alternate conduction mode to a continuous cutoff mode; or
in response to a current frequency of at least one phase winding in the three phase windings being less than or equal to the second frequency threshold, control the operating modes of the three upper bridge switching transistors and the three lower bridge switching transistors to switch from an alternate conduction mode to a continuous cutoff mode; or control the operating modes of the three upper bridge switching transistors or the three lower bridge switching transistors to switch from a continuous conduction mode to a continuous cutoff mode.

7. The motor control unit according to claim 5 or 6, wherein at least one of the control module or the drive circuit is configured to receive power supplied by two or more independent power supplies.

8. The motor control unit according to any one of claims 1 to 7, wherein the first frequency threshold and the second frequency threshold are adjusted with an input voltage of the inverter circuit.

9. The motor control unit according to any one of claims 2 to 8, wherein the current detection circuit comprises a current sampling circuit, a frequency-to-voltage conversion circuit, and a voltage comparator, wherein
the current sampling circuit is configured to output an alternating current signal based on a current frequency of at least one phase winding in the three phase windings;
the frequency-to-voltage conversion circuit is configured to output a direct current signal based on a result of comparison between a voltage of the alternating current signal and a first reference voltage; and
the voltage comparator is configured to output the first detection signal or the second detection signal based on a result of comparison between a voltage of the direct current signal and a second reference voltage.

10. The motor control unit according to claim 9, wherein the current sampling circuit comprises one or more Hall effect sensors, and there is a spacing between each Hall effect sensor and any electrical connection line between the bridge arm midpoints of the three bridge arms and the three phase windings of the drive motor.

11. The motor control unit according to claim 9, wherein the frequency-to-voltage conversion circuit comprises a comparator and a filter circuit, wherein
a first input end of the comparator is connected to the current sampling circuit, a second input end of the comparator is connected to the first reference voltage, and the filter circuit is separately connected to an output end of the comparator and the voltage comparator.

12. The motor control unit according to claim 9, wherein a first input end of the voltage comparator is connected to the second reference voltage, a second input end of the voltage comparator is connected to the frequency-to-voltage conversion circuit, and an output end of the voltage comparator is connected to the control module.

13. The motor control unit according to claim 12, wherein the second reference voltage is adjusted with the input voltage of the inverter circuit.

14. A powertrain, comprising a drive motor configured to control an electric vehicle and the motor control unit according to any one of claims 1 to 13, wherein the motor control unit supplies power to the drive motor.

15. An electric vehicle, comprising a power battery and the motor control unit according to any one of claims 1 to 13 or the powertrain according to claim 14, wherein the power battery supplies power to the motor control unit or the powertrain.
